# NOUVEAU FASCICULE DE BREVET EUROPEEN

(11) **EP 2 403 351 B2**
(45) Date de publication et mention de la décision concernant l'opposition: **03.05.2017**
(45) Mention de la délivrance du brevet: 12.02.2014
(21) Numéro de dépôt: 10709911.1
(22) Date de dépôt: 25.02.2010
(51) Int. Cl.: A23J 1/14, A23J 3/14, A23L 33/17, A23L 27/30

(54) **POUDRE GRANULEE DE LAIT VEGETAL, PROCEDE D'OBTENTION DU LAIT VEGETAL ET SES UTILISATIONS**
PFANZLICHES MILCHGRANULAT, VERFAHREN ZUR HERSTELLUNG VON PFLANZLICHER MILCH UND IHRE VERWENDUNG
VEGETABLE MILK GRANULATED POWDER, METHOD FOR PRODUCING VEGETABLE MILK, AND USES THEREOF

(30) Priorité: 02.03.2009 FR 0951293; 02.03.2009 FR 0951294
(43) Date de publication de la demande: 11.01.2012
(73) Titulaire: Roquette Frères, 62136 Lestrem (FR)
(72) Inventeur: BOURSIER, Bernard, F-62138 Violaines (FR); GEHIN, Bruno, F-62840 Sailly Sur La Lys (FR)
(74) Mandataire: Gallois, Valérie
(86) Numéro de dépôt international: PCT/FR2010/050330
(87) Numéro de publication internationale: WO 2010/100370

(56) Documents cités:
- EP-A1- 0 796 567
- EP-A1- 1 112 693
- EP-A1- 2 123 164
- EP-A2- 0 787 437
- EP-B1- 0 663 797
- EP-B1- 1 696 749
- WO-A1-01/56406
- WO-A1-96/04800
- WO-A1-98/19652
- WO-A1-2005/063056
- WO-A1-2005/063058
- FR-A1- 2 889 417
- US-A- 6 056 949
- US-A1- 2002 146 487
- US-A1- 2008 226 811
- "Veg Boost", publié le 14-06-2010 à Roquette
- MELCION J-P. ET AL: 'Technologie des pulvérulents dans les IAA,', vol. CHPT 10, 2003, EDITIONS TEC & DOC pages 305-308 - 603-619
- MELCION J-P. ET AL: 'Technologie des pulvérulents dans les IAA', vol. CHPT 22, 2003, EDITIONS TEC & DOC pages 641 - 660
- "Food", publié Novembre 2008
- MELCION J-P. ET AL: 'Technologie des pulvérulents dans les IAA', vol. CHPT. 10, 2003, EDITIONS TEC & DOC pages 281 - 314
- Wikipedia: Valeur énergétique.

## Description

### DOMAINE DE L'INVENTION

La présente invention a pour objet une poudre granulée de lait végétal, obtenue à partir de matières premières végétales, apte à former un lait végétal qui se substitue aux laits d'origine animale, et plus particulièrement au lait de vache. La présente invention concerne également un procédé de préparation d'un tel lait végétal.

### ARRIERE-PLAN TECHNOLOGIQUE

L'homme est vieux de plus de 3 millions d'années, mais ce n'est que depuis 12 000 ans qu'il a appris à boire du lait. La domestication des mammifères lui a permis de tirer parti du lait produit par toutes sortes d'animaux : vaches, bufflonnes, ânesses, chèvres.

Et le lait est devenu un aliment pivot de la nutrition humaine. Aujourd'hui, la production mondiale de lait approche les 650 000 millions de tonnes. A 85% elle est due au lait de vache. Cette production mondiale ne cesse de croître au fil des ans, ayant augmentée de plus de 20% en dix ans. Le lait est un aliment qui contient une source de protéines non négligeables et de haute qualité biologique. Les protéines représentent, après les glucides et les lipides, la troisième grande source énergétique de notre alimentation. Elles sont nécessaires à notre survie et sont fournies aussi bien par des produits d'origine animale (viandes, poissons, oeufs, produits laitiers) que par des aliments végétaux (céréales, légumineuses,..). Pendant longtemps, les protéines animales ont été plébiscitées pour leurs excellentes qualités nutritionnelle car elles contiennent tous les acides aminés essentiels en proportion, adéquates. En revanche, aucune des différentes sources de protéines végétales ne peut à elle seule couvrir tous les besoins en acides aminés : il y a souvent un ou plusieurs acides aminés essentiels manquants.

En parallèle, certaines protéines animales peuvent être allergènes, entraînant des réactions très gênantes, voire même dangereuses au quotidien.

Les allergies alimentaires sont en constante progression. Elles sont passées de 1% en 1970 à 6 à 8% de la population aujourd'hui. Ce type d'allergies concerne plus volontiers les enfants en bas âge, 7 à 8% sont ainsi concernés, alors que le pourcentage des adultes varie de 3 à 4%. De plus, le nombre de cas d'allergies sévère a également tendance à augmenter. Ainsi, de plus en plus de chocs anaphylactiques liés directement à la consommation de produits alimentaires allergène a progressé de 700% en 17 ans !

L'allergie aux produits laitiers est une des réactions allergiques les plus répandues. Les études démontrent que 65 % des personnes qui souffrent d'allergies alimentaires sont allergiques au lait. La forme adulte de l'allergie au lait, appelée ici «allergie aux produits laitiers», est une réaction du système immunitaire qui crée des anticorps pour combattre l'aliment indésirable. Cette allergie est différente de l'allergie aux protéines du lait de vache (protéines bovines), également appelée l'APLV, qui touche les nouveau-nés et les enfants. Les manifestations cliniques de cette allergie sont principalement gastro-alimentaires (50à 80% des cas), également cutanées (10 à 39% des cas) et respiratoires (19% des cas). Cette allergie est la première allergie alimentaire à apparaître chez l'enfant, et débute le plus souvent chez le nourrisson âgé de moins d'un an. L'APLV cause des symptômes variés tels que urticaire, eczéma, angio-oedème pouvant toucher le visage, les lèvres, la langue, la voile du palais, le larynx et les cordes vocales dans le formes graves, constipation, diarrhée, flatulences, nausées, migraines, infections, crampes abdominales, congestion nasale et même de gravés crises d'asthme. L'APLV peut également se manifester par un choc anaphylactique et aussi par un syndrome dit de « rescapé de mort subite », et des observations de mort subite du nouveau-né liées à une anàphylaxie au lait de vache ont même été rapportées.

Les personnes allergiques doivent complètement éliminer le lait, les produits laitiers et leurs dérivés de leur alimentation. De plus, les laits d'autres espèces animales sont contre-indiqués en cas d'APLV. Les termes suivants sont des indicateurs de présence de lait de vache ou de ses dérivés dans les ingrédients d'un produit : babeurre, caséinate de calcium, caséinate de sodium, caséine, caséinate, caséine hydrolysée, solides de lait séchés, lactalbumine, lactose, lactoglobuline, lait maigre, poudre de lait, lait condensé sucré et petit lait.

Au vu de tous les désavantages cités ci-dessus liés à la consommation des protéines laitières, il en résulte un grand intérêt pour l'emploi de protéines de substitution, également appelées protéines alternatives, parmi lesquelles se classent les protéines végétales.

C'est par exemple le cas de l'émergence de nombreux laits végétaux qu'il est possible d'introduire dès l'âge de 5 mois dans l'alimentation du nourrisson.

Au niveau légal, il n'existe qu'une définition claire datant de 1909 définissant le lait d'origine animale : « le lait est le produit intégral de la traite totale et ininterrompue d'une femelle laitière bien portante, bien nourrie, et non surmenée. Il doit être recueilli proprement et ne pas contenir de colostrum. Le mot lait sans précision est du lait de vache. Tout autre lait doit être désigné par la dénomination «lait» suivie de l'indication de l'espèce animale : « lait de chèvre », « lait de brebis », « lait de jument ».

Les laits végétaux, obtenus à partir d'ingrédients végétaux peuvent être une alternative aux laits d'origine animale. Ils pallient et évitent les APLV. Ils sont exempts de caséine, de lactose, de cholestérol, sont riches en vitamines et en sels minéraux, sont également riches en acides gras essentiels mais pauvres en acides gras saturés. Certains possèdent également des taux dé fibres intéressants.

Généralement les laits végétaux sont assez pauvres en calcium. Le calcium est un oligo-élément dont la principale fonction est la minéralisation de l'os sous forme de sels de phosphates de calcium. Chez l'adulte le renouvellement du. calcium de l'os mobilise environ 700 mg de calcium par jour. Le calcium intervient aussi dans la coagulation du sang, dans la contraction musculaire et dans de nombreuses réactions enzymatiques au niveau cellulaire. Le calcium est indispensables à tout âge parce qu'il rend nos os solides, mais certaines périodes de la vie demandent une vigilance particulière. Les bébés en ont ainsi particulièrement besoin. A la naissance, il aura besoin d'environ 300 mg de calcium par jour.

Outre le fait que certains laits végétaux sont pauvres en calcium, que d'autres du fait de leur rareté botanique sont indisponibles dans le commerce, il faut également mentionner que certains laits végétaux sont également allergènes. C'est le cas par exemple des laits végétaux préparés à partir d'oléagineux, comme par exemple les laits de soja.

Le soja peut provoquer des réactions graves, voire mortelles chez les personnes sensibles. Aujourd'hui le soja est reconnu comme l'un des « huit grands allergènes » provoquant des réactions d'hypersensibilité immédiate se traduisant par une toux, des éternuements, une hydrorrhée nasale, de l'urticaire, une diarrhée, un oedème du visage, un essoufflement, un gonflement de la langue, des problèmes de déglutition, une chute de la tension - artérielle, une transpiration excessive, un évanouissement, un choc anaphylactique ou même la mort dans les cas les plus sévères. Le soja contiendrait entre 25 et 30 composants allergènes. De plus, le soja contient des isoflavones (génistéine, daidzéine, glycétéine), phytoestrogènes qu'il est totalement déconseillé de donner aux enfants de moins de trois ans. En effet l'Agence Française de Sécurité Sanitaire des Aliments (AFSSA) soupçonne fortement ces composés de perturber lé développement sexuel des enfants, du fait de leur structure très proche des hormones femelles animales.

Ainsi, le lait maternisé à base de soja est loin d'être la meilleure solution pour les bébés allaités au biberon qui sont allergiques aux préparations lactées classiques. Les phytoestrogènes contenus dans le soja peuvent interférer sur le bon développement de la thyroïde, du cerveau et du système reproducteur du bébé. Le lait maternisé au soja ne constitue pas non plus la solution idéale à l'allergie au lait de vache.
Une étude non publiée et menée par le Docteur Stefano Guandalini du Département de Pédiatrie de l'Université de Chicago a montré « qu'un nombre significatif d'enfants présentant une intolérance aux protéines du lait de vache développe une intolérance aux protéines de soja lorsqu'on introduit du lait de soja dans leur alimentation ». Tant de bébés allergiques au lait de vache sont également allergiques au lait de soja que les chercheurs ont commencé à conseiller aux pédiatres de cesser de recommander le lait de soja et de prescrire plutôt des préparations végétales non allergènes comme le lait de riz par exemple.

Le soja aurait également une influence négative sur la maladie coeliaque. Cette maladie est un grave syndrome de malabsorption, le plus souvent associé au gluten (fraction protéique présente dans le blé et quelques autres céréales) et à une intolérance au lait. Mais peu de personnes savent que le soja peut également être en cause. Certains adultes atteints de la maladie coeliaque souffrent de diarrhées, maux de tête, nausées et flatulences même lorsqu'ils suppriment le gluten de leur alimentation et consomment de minuscules quantités de soja. Une étude non publiée réalisée sur 98 enfants et bébés présentant de multiples allergies gastro-intestinales a révélé que 62% étaient allergiques à la fois au soja et au lait et que 35% étaient allergiques à la fois au soja et au gluten.

Enfin, si les allergies au soja sont en augmentation, c'est peut-être aussi la faute des graines de soja génétiquement modifiées. Au Royaume. Uni, le York Nutritional Laboratories, l'un des premiers laboratoires européens spécialisés dans la sensibilité alimentaire, a constaté une hausse de 50% des allergies au soja en 1998, année ou le soja génétiquement modifié a fait son apparition sur le marché mondial. Ces chercheurs ont constaté que l'une des 16 protéines de soja les plus allergènes était présente à des concentrations de 30% ou plus dans le soja génétiquement modifié. Les personnes allergiques au soja génétiquement modifié ne le sont peut-être même pas au soja ordinaire. Il n'est pas exclu que les coupables soient des protéines exogènes allergènes, introduites au cours des mutations.

Au vu de tous les désavantages des protéines laitières mais également du caractère allergène dangereux conféré par certaines protéines végétales, il existe une réelle demande de la part des consommateurs, non satisfaite à ce jour, pour des laits végétaux possédant une innocuité indiscutable et reconnue et pouvant de ce fait être consommés par toute la famille. Les fabricants traditionnels commencent également à chercher de nouvelles sources de protéines pour enrichir leurs produits.

Le document WO 96/04800 décrit un procédé de préparation d'un lait d'amandes, et les produits obtenus. Par contre, même si ces produits sont destinés à se substituer au lait de vache, il n'en demeure pas moins qu'ils présentent un très fort potentiel allergène. En effet, les amandes font partie des fruits oléagineux (comme le soja) et sont connues pour leur très grande allergènicité, pouvant chez certaines personnes se manifester un choc anaphylactique violent pouvant entraîner la mort. Par conséquent, les produits décrits dans ce document ne répondent pas à la problématique de la présente invention.

Le document EP 1859 692 A1 décrit une composition, pour boisson végétale contenant de l'eau et au moins une fibre. Le but recherché n'est pas la substitution des laits animaux et lesdites compositions de ce document ne contiennent pas de protéines.

Le document EP 1696749 B1 décrit un procédé de fabrication d'une préparation en poudre pour l'obtention d'une boisson neutre ou légèrement acide, dont le pH peut varier de 5,5 à 8, suite au mélange de la préparation en poudre avec un liquide. Lesdites compositions comprennent une source de protéines et un stabilisant bien spécifique. L'objectif de ce document n'est absolument pas de trouver de formuler un lait végétal capable de se substituer au lait de vache.

La société Demanderesse s'est également attelée à cette recherche afin de pouvoir répondre aux demandes croissantes des industriels et des consommateurs pour des composés possédant des propriétés nutritionnelles intéressantes sans pour autant présenter les inconvénients de certains composés déjà existants. Les travaux de la Demanderesse ont portés sur la formulation de nouveaux laits végétaux possédant une innocuité indiscutable et reconnue, et pouvant de ce fait être consommés par toute la famille.

C'est ainsi que la Demanderesse a réalisé d'importants travaux de recherche sur les Matières Protéiques Végétales (MPV) en tant qu'ingrédients alimentaires, et plus particulièrement sur les protéines de pois. Cet intérêt particulier pour les protéines de pois est tout d'abord dû à leurs nombreuses propriétés fonctionnelles, mais aussi à des qualités nutritionnelles intéressantes de par leur composition en acides aminés dits essentiels.

Plus particulièrement, les travaux de la Demanderesse ont porté sur la formulation d'une nouvelle composition pour boisson contenant entre autre des protéines de pois, et étant capable une fois mise en suspension dans de l'eau de se substituer au lait de vache.

### RESUME DE L'INVENTION

Il est du mérite de la Demanderesse d'avoir découvert que les protéines de pois pouvaient, de façon surprenante, remplacer avantageusement les protéines de lait dans des boissons, tout en conservant des qualités nutritionnelles et organoleptiques au moins équivalentes, voire supérieures, à celles de la boisson d'origine.
En effet, la société Demanderesse a eu le mérite de concilier tous les objectifs réputés jusqu'alors difficilement conciliables en proposant une nouvelle composition contenant entre autre des protéines de pois, caractérisée en ce qu'elle :
- associe une protéine de pois et un hydrolysat d'amidon, possédant lui-même, une caractéristique fonctionnelle, et/ou une caractéristique nutritionnelle, et/ou une caractéristique technologique intéressante et recherchée,
- se présente sous forme sèche mais non pulvérulente, c'est-à-dire sous forme granulaire, on parle de poudre granulée,
- présente une teneur en matière sèche supérieure à 80%, de préférence supérieure à 85%, et encore plus préférentiellement supérieure à 90%,
- présente un caractère « instant », c'est-à-dire que cette poudre granulée présente de très bonne mouillabilité, dispersibilité et solubilité dans l'eau.

Ce caractère instant sera très appréciable lors de la mise en suspension de ladite poudre granulée pour la formulation d'une boisson, et plus particulièrement d'un lait végétal.

Ladite poudre granulée est caractérisée par le fait qu'elle présente une excellente dispersion dans l'eau et une meilleure dissolution à froid, une meilleure coulabilité pour les opérations de dosage, et qu'elle offre un meilleur environnement pour la manutention des poudres par l'absence de poussières.

La présente invention a donc pour objet une poudre granulée de lait végétal comprenant au moins une composition de protéines de pois et au moins un hydroysat d'amidon, caractérisée en ce qu'elle présente un diamètre moyen volumique laser D4,3 compris entre 10µm et 500µm, de préférence entré 50µm et 350µm et encore plus préférentiellement entre 70µm et 250µm, et une matière sèche, déterminée après étuvage à 130°C pendant 2 heures, supérieure à 80%, de préférence supérieure à 85%, et encore plus préférentiellement supérieure à 90%, caractérisée en ce que le ratio pondéral de la composition de protéines de pois à l'hydrolysat d'amidon de la poudre granulée est compris entre 80 :20 et 45 :55, en ce que l'hydrolysat d'amidon est une maltodextrine et en ce que la somme des quantités de protéines de pois et d'hydrolysat d'amidon de ladite poudre granulée est comprise entre 50 et 100% de la masse totale de ladite poudre granulée (sec/sec).

En outre, la présente invention a pour objet un procédé de préparation d'un lait végétal caractérisé en ce d'une poudre granulée comprenant une composition de protéines de pois et au moins un hydrolysat d'amidon, et possédant un diamètre moyen volumique laser D4,3 compris entre 10µm et 500µm, de préférence entre 50µm et 350µm et encore plus préférentiellement entre 70µm et 250µm, et une matière sèche, déterminée après étuvage à 130°C pendant 2 heures, supérieure à 80%, de préférence supérieure à 85%, et encore plus préférentiellement supérieure à 90%, est mise en suspension dans de l'eau à un taux de dissolution compris entre 2 et 30% en poids sec, de préférence entre 2 et 20%, plus préférentiellement encore entre 3 et 15%, et en particulier entre 5 et 10%, caractérisé en ce que le ratio pondéral de la composition de protéines de pois à l'hydrolysat d'amidon de la poudre granulée est compris entre 80 :20 et 45 :55, en ce que l'hydrolysat d'amidon est une maltodextrine et en ce que la somme des quantités de protéines de pois et d'hydrolysat d'amidon de ladite poudre granulée est comprise entre 50 et 100% de la masse totale de ladite poudre granulée (sec/sec).

### DESCRIPTION DETAILLEE DES MODES DE REALISATION

La présente invention est relative à une poudre granulée de lait végétal selon la revendication 1.

Dans la présente demande, la dénomination « lait végétal » est utilisée et concerne une boisson qui n'est pas issue du lait d'origine animale, et plus particulièrement du lait de vache.

Dans un mode préféré de la présente invention, ledit lait végétal ne contient que des ingrédients végétaux.

Ladite poudre granulée de lait végétal comprenant au moins une protéine de pois et au moins un hydrolysat d'amidon permet un remplacement et une élimination complète du lait de vache de l'alimentation quotidienne, tout en assurant des apports nutritionnels au moins équivalents, voire améliorés par rapport à ceux apportés lors de la consommation traditionnelle de lait de vache.

Au sens de la présente invention, on utilisera d'une manière indifférente les termes lait végétal, lait de pois, boisson et boisson végétale pour désigner ladite boisson obtenue ou susceptible d'être obtenue après la mise en solution de la poudre granulée de lait végétal de la présente invention.

Dans la présente invention, ladite poudre granulée de lait végétal est caractérisée en ce que le ratio pondéral de la protéine de pois à l'hydrolysat d'amidon est compris entre 80 :20 et 45 :55, plus préférentiellement encore entre 65 :35 et 45 :55, et en particulier entre 55 :45 et 45 :55.

Dans la présente invention, ladite poudre granulée de lait végétal est caractérisée en ce que la somme des quantités de protéine de pois et d'hydrolysat d'amidon est comprise entre 50 et 100% de la masse totale de ladite poudre granulée (sec/sec).

Dans la présente invention, l'appellation « pois » entend toutes plantes appartenant à la famille des légumineuses, et plus particulièrement à la famille des papilionacés.

Cette définition inclut notamment toutes les plantes décrites dans l'un quelconque des tableaux contenus dans l'article de R. HOOVER et al., 1991 (HOOVER. R. (1991) « Composition, structure, functionality and chemical modifacation of legume starches : a review » Can. J. Physiol. Pharmacol., 69 pp. 79-92).

Selon un mode préférentiel de la présente invention, la protéine végétale appartient aux protéines de légumineuses.

Selon un autre mode préférentiel, la protéine de légumineuse est choisie dans le groupe comprenant le pois, le haricot, le soja, la fève et la fèverole, et leurs mélanges.

De manière encore plus préférée, ladite protéine de légumineuse est le pois.

Le terme « pois » étant ici considéré dans son acception la plus large et incluant en particulier :
- toutes les variétés sauvages de « pois lisse » (« smooth pea ») et de « pois ridés » (« wrinkled pea »), et
- toutes les variétés mutantes de « pois lisse » et de « pois ridé » et ce, quelles que soient les utilisations auxquelles on destine généralement lésdites variétés (alimentation humaine, nutrition animale et/ou autres utilisations).

Lesdites variétés mutantes sont notamment celles dénommées « mutants r », « mutants rb », « mutants rug 3 », « mutants rug 4 », « mutants rug 5 » et « mutants lam » tels que décrits dans l'article de C-L HEYDLEY et al. intitulé « Developing novel pea starches » Proceedings of the Symposium of the Industrial Biochemistry and Biotechnology Group of the Biochemical Society, 1996, pp. 77-87.

En effet, le pois est la légumineuse à graines riches en protéines qui, depuis les années 70, s'est le plus développée en Europe et principalement en France, non seulement comme source protéique pour l'alimentation animale, mais aussi pour l'alimentation humaine.

Les protéines de pois sont constituées, comme toutes les protéines de légumineuses, de trois classes de protéines principales: les globulines, les albumines et les protéines dites « insolubles ».

L'intérêt des protéines de pois réside dans leurs bonnes capacités émulsifiantes, leur absente d'allergènicité, et leur faible coût, ce qui en fait un ingrédient fonctionnel économique. Grâce à leur composition spécifique en acides, aminés, les protéines de pois présentent également des intérêts nutritionnels non négligeables.

De plus, les protéines de pois participent favorablement au développement durable et leur impact carbone est très positif. En effet, la culture du pois est respectueuse de l'environnement, et ne nécessite pas d'engrais azotés, car le pois fixe l'azote, de l'air.

Par protéine de pois, on désigne, de manière préférée selon la présente invention, les protéines de pois qui sont principalement sous forme native, globulaire, globulines, ou albumines.

De manière encore plus préférentielle, les protéines de pois, utilisées selon l'invention sont sous forme d'une composition de protéines de pois, présentant :
- une teneur en protéines totales (N x 6,25), exprimée en grammes de produit sec, d'au moins 60% en poids de produit sec. De préférence, on utilise dans le cadre de la présente invention une composition de protéine ayant une teneur en protéines élevée comprise entre 70% et 97% en poids de produit sec, de préférence comprise entre 76% et 95%, plus préférentiellement encore comprise entre 78% et 88%, et en particulier comprise entre 78% en 85%,
- une teneur en protéines solubles, exprimée selon un test de mesure de la solubilité dans l'eau des protéines, comprise entre 20 et 99%. De préférence, on utilise dans le cadre de la présente invention une composition de protéines ayant un taux élevé de protéines solubles compris entre 35 et 95%, de préférence entre 45 et 90%, plus préférentiellement encore entre 50 et 80%, et en particulier entre 55 et 75%.

Pour déterminer le taux de protéines totales, on peut effectuer le dosage de la fraction azotée soluble contenue dans l'échantillon selon la méthode de Kjeldahl, puis on obtient le taux de protéines totales en multipliant le taux d'azote exprimé en pourcentage de poids de produit sec par le facteur 6,25. Cette méthode est bien connue de l'homme du métier.

Dans la présente invention, le taux de protéines totales peut également' être mesuré par le dosage de la fraction azotée soluble contenue dans l'échantillon selon la méthode de Dumas A., 1831, Annales de chimie, 33, 342, comme cité par Buckee, 1994, dans Journal of the Institute of Brewing, 100, pp 57-64, puis on obtient le taux de protéines totales en multipliant le taux d'azote exprimé en pourcentage de poids de produit sec par le facteur 6,25. Cette méthode, également connue comme méthode de dosage de l'azote par combustion, consiste en une combustion totale de la matrice organique sous oxygène. Les gaz produits sont réduits par du cuivre puis desséchés et le gaz carbonique est piégé. L'azote est ensuite quantifié à l'aide d'un détecteur universel. Cette méthode est bien connue de l'homme du métier.

Pour déterminer le taux de protéines solubles, on mesure la teneur en protéines solubles dans l'eau dont le pH est ajusté à 7,5 +/- 0,1 à l'aide d'une solution de HCl ou NaOH, par une méthode de dispersion d'une prise d'essai de l'échantillon dans de l'eau distillée, centrifugation et analyse du surnageant. Dans un bécher de 400 ml, on introduit 200,0 g d'eau distillée à 20°C +/- 2°C, et on place le tout sous agitation magnétique (barreau aimanté et rotation à 200 rpm). On ajoute exactement 5 g de l'échantillon à analyser. On agite pendant 30 min, et on centrifuge pendant 15 min à 4.000 rpm. On réalise, sur le surnageant la méthode de détermination de l'azote selon la méthode précédemment décrite.

Ces compositions de protéines de pois, présentent de manière préférée plus de 50, 60, 70, 80 ou 90 % de protéines de plus de 1.000 Da. En outre, ces compositions de protéines de pois, présentent de manière préférée un profil de distribution des poids moléculaires constitué de :
- 1 à 8%, de préférence de 1,5 à 4%, et plus préférentiellement encore de 1,5 à 3% de protéines de plus de 100.000 Da,
- 20 à 55%, de préférence de 25 à 55% de protéines de plus de 15.000 et d'au plus de 100.000 Da,
- 15 à 30% de protéines de plus de 5.000 et d'au plus de 15.000 Da,
- et de 25 à 55%, de préférence de 25 à 50%, et plus préférentiellement encore de 25 à 45% de protéines d'au plus de 5.000 Da.

La détermination des poids moléculaires des protéines constitutives desdites compositions de protéines de pois est réalisée par chromatographie d'exclusion stérique en conditions dénaturantes (SDS + 2-mercaptoéthanol); la séparation se fait en fonction de la taille des molécules à séparer, les molécules de taille élevée étant éluées en premier.

Des exemples de compositions de protéines de pois selon l'invention, ainsi que le détail de la méthode de détermination des poids moléculaires peuvent être trouvés dans le brevet WO 2007/017572 dont la Société Demanderesse est également titulaire.

Selon la présente invention, les dites protéines de pois, utilisées pour l'obtention de la poudre granulée peuvent également être des « concentrats de protéines de pois » ou des « isolats de protéines de pois ». Les concentrats et les isolats de protéines de pois sont définis en regard de leur contenu en protéines (cf. la revue de J. GUEGUEN de 1983 dans Proceedings of european congress on plant proteins for human food (3-4) pp 267 - 304):
- les concentrats de protéines de pois, sont décrits comme présentant un contenu en protéines totales de 60 à 75 % sur sec, et
- les isolats de pois, sont décrits comme présentant un contenu en protéines totales de 90 à 95 % sur sec,
les teneurs en protéines étant mesurées pâr la méthode de Kjeldhal (cf. ci-avant), la teneur en azote étant multiplié par le facteur 6,25.

Dans un autre mode de réalisation, de la présente invention, les compositions de protéines de pois, pouvant être utilisées peuvent également être dés « hydrolysats de protéines de pois ». Les hydrolysats de protéines de pois, sont définis comme des préparations obtenues par hydrolyse par voie enzymatique, par voie chimique, ou par les deux voies simultanément ou successivement, de protéines de pois. Les hydrolysats de protéines se composent d'un mélange de peptides de différentes tailles et d'acides aminés libres. Cette hydrolyse peut avoir un impact sur la solubilité des protéines. L'hydrolyse enzymatique et/ou chimique est par exemple décrite dans la demandé de brevet WO 2008/001183. De préférence, l'hydrolyse de protéines n'est pas complète, c'est-à-dire ne résulte pas en une composition comprenant uniquement ou essentiellement des acides aminés et des petits peptides (de 2 à 4 acides aminés). Ainsi, les hydrolysats selon l'invention ne sont pas des compositions HPV. Les hydrolysats préférés comprennent plus de 50, 60, 70, 80 ou 90 % de protéines de plus de 500 Da.

Les procédés de préparation d'hydrolysats de protéines sont bien connus de l'homme du métier et peuvent par exemple comprendre les étapes suivantes : dispersion des protéines dans l'eau pour obtenir une suspension, hydrolyse de cette suspension par le traitement choisi. Le plus souvent, il s'agira d'un traitement enzymatique combinant un mélange de différentes protéases, éventuellement suivi d'un traitement thermique destiné à inactiver les enzymes encore actives. La solution obtenue peut ensuite être filtrée sur une ou plusieurs membranes de façon à séparer les composés insolubles, éventuellement l'enzyme résiduelle et les peptides de haut poids moléculaire (supérieur à 10 000 daltons).

Selon la présente invention, la poudre granulée de lait végétal comprend au moins une protéine végétale et au moins un hydrolysat d'amidon qui comprend une maltodextrine.

Dans cette description, le terme « hydrolysat d'amidon » désigne tout produit obtenu par hydrolyse acide ou enzymatique d'amidon de légumineuse, de céréales ou de tubercules. Divers procédés d'hydrolyse sont connus et ont été décrits de manière générale aux pages 511 et 512 de l'ouvrage Encyclopedia of Chemical Technology de Kirk-Othmer, 3ème Edition, Vol. 22, 1978. Ces produits d'hydrolyse se définissent également comme des mélanges purifiés est concentrés formés de chaînes linéaires constituées d'unités D-glucose et de polymères de D-glucose essentiellement lié en α(1→4) avec seulement de 4 à 5 % de liaisons glucosidiques ramifiées α(1→6), de poids moléculaires extrêmement variés, complètement solubles dans l'eau. Les hydrolysats d'amidon sont très bien connus et parfaitement décrits dans Encyclopedia of Chemical Technology de Kirk-Othmer, 3ème Edition, Vol. 22, 1978, pp. 499 à 521.

Des exemples de produits d'hydrolyse de l'amidon sont choisis parmi les maltodextrines, les sirops de glucose, le dextrose (forme cristallisée du α-D-glucose) et leurs mélanges quelconques.

La distinction entre les produits d'hydrolyse de l'amidon repose principalement sur la mesure de leur pouvoir réducteur, exprimé classiquement par la notion de Dextrose Equivalent ou DE. Le DE correspond à la quantité de sucres réducteurs, exprimée en équivalent dextrose pour 100g de matière sèche du produit. Le DE mesure donc l'intensité de l'hydrolyse de l'amidon, puisque plus le produit est hydrolysé, plus il contient de petites molécules (telles que le dextrose et le maltose par exemple) et plus son DE est élevé. Au contraire, plus le produit contient de grandes molécules (polysaccharides), plus son DE est bas.

Du point de vue réglementaire, et également au sens de la présente invention, les maltodextrines ont un DE compris de 1 à 20, et les sirops de glucose ont un DE supérieur à 20.

De tels produits sont par exemple les maltodextrines et les sirops de glucose déshydratés commercialisés par la Demanderesse sous les dénominations de GLUCIDEX® (DE disponibles = 1, 2, 6, 9, 12, 17, 19 pour les maltodextrines et DE = 21, 29, 33, 38, 39, 40, 47 pour les sirops de glucose). On peut également citer les sirops de glucose commercialisés par la Demanderesse sous la dénomination « Roquette sirops de glucose».

Selon la présente invention, la poudre granulée de lait végétal comprend au moins une protéine de pois et au moins une maltodextrine.

Selon une première variante, la poudre granulée de lait végétal comprend une protéine de pois et une maltodextrine possédant un DE compris entre 15 et 19.

La poudre granulée de lait végétal peut comprendre une protéine de pois associée à un sirop de glucose dont le DE n'excède pas la valeur de 47, et de préférence 35.

Ainsi, la poudre granulée de lait végétal peut comprendre une protéine de pois et un mélange de maltodextrines et de sirop de glucose.

Ainsi, la poudre granulée de lait végétal peut comprendre une protéine de pois et un mélange de maltodextrine possédant un DE compris entre 15 et 19 et de sirop de glucose dont le DE n'excède pas la valeur de 47, et de préférence 35.

Dans le cadre de la présente invention, l'expression « poudre granulée » signifie qu'il existe un mélange intime entre les différents composants de cette poudre, que leur répartition au sein de la poudre est sensiblement homogène, et que ceux-ci ne sont pas uniquement liés entre eux par un simple mélange physique. Des interactions entre les constituants peuvent survenir, aussi bien à l'extérieur de la particule qu'à l'intérieur.

Dans un mode de réalisation particulier, la poudre granulée de lait végétal n'est pas enrobée.

En effet, pour obtenir ladite poudre granulée de lait végétal, la Société Demanderesse a constaté qu'il convenait d'émployer un mélange d'au moins une protéine de pois et d'au moins un hydrolysat d'amidon, et de modifier ses caractéristiques physiques en employant un procédé approprié, de telle sorte que l'on obtienne simultanément des propriétés fonctionnelles très intéressantes ne pouvant être obtenues si chaque composé est utilisé séparément ou si les composés sont utilisés simultanément mais sous la forme d'un simple mélange de poudres.

Dans la présente invention, ladite poudre granulée de lait végétal est préparée par un procédé de séchage selon une technique choisie dans le groupe constitué par l'atomisation, la granulation, l'extrusion ou par tout autre moyen de séchage connu de l'homme du métier, et dans des conditions adaptées à l'équipement choisi, susceptible de permettre l'obtention d'une poudre granulée de lait végétal selon l'invention.

Le procédé de fabrication de ladite poudre de lait végétal selon la présente invention consiste à sécher conjointement au moins deux constituants, et comprend une étape de mise en contact intime d'au moins une protéine de pois avec au moins un hydrolysat d'amidon, ces étape de mise en contact intime pouvant être menées selon toute méthode connue de l'homme du métier, et notamment selon une technique choisie parmi l'atomisation, la granulation et l'extrusion, et toute combinaison d'au moins deux de ces techniques, telle que ladite étape de mise en contact intime conduise à une matière sèche déterminée après étuvage à 130°C pendant 2 heures, supérieure à 80%, de préférence supérieure à 85%, et encore plus préférentiellement supérieure à 90%. A titre d'exemple, on citera un procédé de fabrication de ladite poudre granulée de lait végétal selon une unique technique d'atomisation, ou selon une unique technique de granulation, ou encore selon une combinaison entre une technique d'atomisation suivie d'une technique de granulation.

Dans un mode préféré de la présente invention, la poudre granulée de lait végétal est mise en suspension dans tout liquide potable destiné à la consommation humaine.

Ainsi, un lait végétal est obtenu par dissolution de la poudre granulée de l'ait végétal selon la présente invention, caractérisé en ce que le taux de dissolution de la poudre granulée de lait végétal est compris entre 2 et 30% en poids sec, de préférence entre 2 et 20%, plus préférentiellement encore entre 3 et 15%, et en particulier entre 5 et 10%.

De préférence, la poudre granulée de lait végétal est mise en solution dans un liquide choisi dans le groupe constitué par l'eau, les jus de fruits, les nectars de fruits, les jus de légumes, les nectars de légumes, les sodas.

De manière encore plus préférentielle, la poudre granulée de lait végétal est mise en solution dans de l'eau, ladite eau pouvant être de l'eau de source, de l'eau minérale, gazéifiée naturellement ou par adjonction de gaz carbonique ou non gazéifiée.

Dans un mode préférentiel de l'invention, la poudre granulée dé lait végétal ou le lait végétal obtenu par dissolution de la poudre granulée de lait végétal selon l'invention est utilisée comme substitut de lait d'origine animal, et plus particulièrement de lait de vache.

Dans un autre mode préférentiel de l'invention, la poudre granulée de lait végétal ou le lait végétal obtenu par dissolution de la poudre granulée de lait végétal selon l'invention est utilisée dans la préparation des aliments d'allaitement, et plus particulièrement dans la préparation de laits d'allaitements pour les nourrissons et enfants en bas âge.

Selon un mode de réalisation préféré de l'invention, ledit lait végétal est caractérisé en ce qu'il présente un pH compris entre 5 et 9, de préférence entre 5,5 et 8, et plus préférentiellement encore entre 5,8 et 7,7.

Les appareils électroniques (pH-mètres) permettent une mesure assez précise de la valeur du pH, à condition d'être correctement étalonnés par au moins deux solutions dites étalons, dont le pH est connu.

Selon le liquide choisi pour la mise en solution de la poudre granulée de lait végétal, le pH peut varier. Eventuellement il peut-être corrigé par tout moyen connu par l'homme du métier, et notamment par l'utilisation d'acides ou de bases à usage alimentaire.

Dans un autre mode encore plus préférentiel, la poudre granulée de lait végétal ou le lait végétal obtenu par dissolution de la poudre granulée de lait végétal peut être supplémentée avec d'autres éléments, afin de satisfaire et de répondre à toutes les caractéristiques organoleptiques et nutritionnelles ciblées.

Selon un mode de réalisation avantageux de la présente invention, le lait végétal sous forme de poudre granulée ou de solution contient en outre une fibre végétale.

Dans la présente invention, le terme « fibre végétale » désigne les fibres alimentaires végétales solubles et/ou insolubles. Ces dernières ne désignent pas seulement les matières fibreuses au sens strict, mais également toute une série de composés différents qui sont contenus presque exclusivement dans les aliments d'origine végétale et qui présentent la propriété commune de ne pouvoir être décomposés par les enzymes digestives de l'homme. Presque toutes les fibres alimentaires sont des polymères glucidiques. Depuis quelques années, les nutritionnistes se sont intéressés à un nouveau type de fibres alimentaires : l'amidon résistant. Il s'agit d'un amidon ou d'une fraction d'amidon qui n'est pas digérée dans l'intestin grêle et qui est fermentée par les bactéries du colon.

A la différence des fibres végétales traditionnelles, ces amidons présentent l'avantage de ne pas modifier l'apparence du produit dans lequel ils sont incorporés et constituent en quelque sorte une source de fibres invisible à l'oeil nu. Ces amidons sont préconisés dans de nombreuses applications.

Ainsi, dans la présente invention, la fibre végétale est choisie parmi les fibres solubles, les fibres insolubles et leurs mélanges quelconques.

Selon un mode de réalisation avantageux, le lait végétal de la présente invention, sous forme de poudre granulée ou de solution, comprend au moins une composition de protéines de pois et au moins une fibre végétale soluble.

De préférence, ladite fibre soluble d'origine végétale est choisie dans le groupe constitué par les fructanes dont les Fructo-oligosaccharides (FOS) et l'inuline, les Gluco-oligosaccharides (GOS), les Isomalto-oligosaccharides (IMOs), les Trans-galacto-oligosaccharide (TOS), les pyrodextrines, le polydextrose, les maltodextrines branchées, les dextrines indigestibles et les oligosaccharides solubles issus de plantes oléagineuses ou protéagineuses.

Par fibre soluble, on entend des fibres solubles dans l'eau. Les fibres peuvent être dosées selon différentes méthodes AOAC. On peut citer à titre d'exemple, les méthodes AOAC 997.08 et 999.03 pour les fructanes, les FOS et l'inuline, la méthode AOAC 2000.11 pour le polydextrose, la méthode AOAC 2001.03 pour le dosage des fibres contenues dans les maltodextrines branchées et les dextrines indigestibles ou la méthode AOAC 2001.02 pour les GOS ainsi que les oligosaccharides solubles issus de plantes oléagineuses ou protéagineuses. Parmi les oligosaccharides solubles issus de plantes oléagineuses ou protéagineuses, on peut citer les oligosaccharides de soja, de colza ou de pois.

Selon un mode de réalisation particulièrement avantageux de la présente invention, le lait végétal, sous forme de poudre granulée ou de solution, comprend des protéines de pois associées à des fibres végétales solubles qui sont des maltodextrines branchées.

On entend par maltodextrines branchées (MDB), les maltodextrines spécifiques identiques à celles décrites dans le brevet EP 1.006.128-B1 dont la Demanderesse est titulaire. Ces MDB ont l'avantage de représenter une source de fibres indigestibles bénéfiques pour le métabolisme et pour l'équilibre intestinal. En particulier, on pourra utiliser des MDB présentant entre 15 et 35% de liaisons glucosidiques 1-6, une teneur en sucres réducteurs inférieure à 20%, une masse moléculaire moyenne en poids MW comprise entre 4000 et 6000 g/mole et une masse moléculaire moyenne en nombre Mn comprise entre 250 et 4500 g/mole.

Certaines sous-familles de MDB décrites' dans la susdite demandé peuvent aussi être utilisées conformément à l'invéntion. Il s'agit par exemple de MDB de hauts poids moléculaires présentant une teneur en sucres réducteurs au plus égale à 5 et un Mn compris entre 2000 et 4500 g/mole. Les MDB de bas poids moléculaires présentant une teneur en sucres réducteurs comprise entre 5 et 20% et une masse moléculaire Mn inférieure à 2000 g/mole peuvent également être employées.

Dans la présente demande, les pyrodextrines désignent les produits obtenus par chauffage de l'amidon amené à faible taux d'humidité, en présence de catalyseurs acides ou basiques, et présentant généralement un poids moléculaire compris entre 1000 et 6000 daltons. Ce grillage à sec de l'amidon, le plus couramment en présence d'acide, entraîne à la fois une dépolymérisation de l'amidon et un réarrangement des fragments d'amidon obtenus, conduisant à l'obtention de molécules très ramifiées. Cette définition vise en particulier les dextrines dites indigestibles, d'un poids moléculaire moyen de l'ordre de 2000 daltons.

Le polydextrose est une fibre soluble produite par polymérisation thermique du dextrose, en présence de sorbitol et d'acide comme catalyseur. Un exemple d'un tel produit est par exemple le LITESSE® commercialisé par DANISCO.

Un exemple d'association avec une protéine végétale particulièrement intéressante est l'utilisation de NUTRIOSE®, qui est une gamme complète de fibres solubles, reconnues pour leurs bienfaits, et fabriquées et commercialisées par la Demanderesse. Les produits de la gamme NUTRIOSE® sont des dérivés d'amidon de blé ou de maïs partiellement hydrolysés, qui contiennent jusqu'à 85 % de fibre. Cette richesse en fibre permet d'augmenter la tolérance digestive, d'améliorer la gestion de calorie, de prolonger le dégagement d'énergie et d'obtenir un taux de sucre inférieur. De plus, la gamme NUTRIOSE® est l'une des fibres les mieux tolérées disponibles sur le marché. Elle montre une tolérance digestive plus élevée, permettant une meilleure incorporation que d'autres fibres, ce qui représente de vrais avantages alimentaires.

Selon un autre mode de réalisation préférentiel de la présente invention, le lait végétal, sous forme de poudre granulée ou de solution comprend des protéines de pois et au moins une fibre végétale insoluble.

De préférence, ladite fibre végétale insoluble est choisie dans le groupe constitué par les amidons résistants, les fibres de céréales, les fibres de fruits, les fibres de légumes, les fibres de légumineuses et leurs mélanges.

On peut citer par exemple des fibres telles que les fibres de bambou, de pois ou de carotte.

Selon une première variante, ladite poudre granulée de lait végétal ou le lait végétal obtenu par dissolution de la poudre granulée de lait végétal comprend des protéines de pois et au moins une fibre végétale insoluble, et de préférence une fibre de légumineuse, et encore plus préférentiellement une fibre de pois.

Selon une seconde variante, la fibre végétale insoluble est un amidon résistant. On pourra utiliser indifféremment les amidons résistants naturels ou les amidons résistants obtenus par modification chimique, et/ou physique, et/ou enzymatique.

Selon la présente invention, on désigne par amidon résistant, un amidon ou une fraction d'amidon qui n'est pas digérée dans l'intestin grêle et qui est fermentée par les bactéries du colon. Quatre catégories d'amidon résistant ont été identifiées :
- les amidons encapsulés, présents dans la plupart des aliments végétaux non raffinés tels que les légumes secs, qui sont inaccessibles aux enzymes (RS1)
- l'amidon granulaire de certains aliments crus comme la banane ou la pomme de terre et les amidons riches en amylose (RS2)
- les amidons rétrogradés, que l'on trouve dans les aliments cuits puis réfrigérés ou congelés (RS3)
- les amidons modifiés par voie chimique comme en particulier les amidons éthérifiés ou estérifiés (RS4).

Ces amidons résistants diminuent la réponse glycémique, améliorent la santé du système digestif grâce à leurs propriétés prébiotiques et contribuent à la régularité du transit, sans être à haute valeur calorique.

Selon une troisième variante, la fibre végétale insoluble comprend un mélange d'au moins un amidon résistant et d'une fibre de pois.

De préférence, on utilisera un amidon résistant issu d'amidon ayant une teneur en amylose supérieure à 50%. Les amidons riches en amylose EURYLON® commercialisés par la Demanderesse conviennent particulièrement.

Selon un autre mode particulièrement avantageux de l'invention, la poudre granulée de lait végétal ou le lait végétal obtenu par dissolution de la poudre granulée de lait végétal comprend des protéines de pois et un mélange de fibres solubles et insolubles.

De façon avantageuse, les fibres solubles sont des maltodextrines branchées lorsque les fibres insolubles sont choisies parmi les fibres de légumineuses et les amidons résistants, ou sont un mélange des deux.

Selon une caractéristique particulièrement avantageuse de l'invention, ladite légumineuse dont sont issues les fibres de légumineuses et les protéines de légumineuses est sélectionnée dans le groupe comprenant la luzerne, le trèfle, le lupin, le pois, le haricot, la fève, la fèverole, la lentille et leurs mélanges.

Selon un mode de réalisation avantageux de la présente invention, la poudre granulée de lait végétal ou le lait végétal obtenu par dissolution de la poudre granulée de lait végétal contient en outre un élément sélectionné dans le groupe comprenant les vitamines, les oligo-éléments, les sels minéraux et leurs mélanges.

Les vitamines sont des substances qui n'apportent pas d'énergie mais qui sont indispensables au bon fonctionnement de l'organisme. Elles interviennent en faible concentration dans de nombreux processus vitaux. Notre corps pour se développer harmonieusement doit disposer d'un apport régulier de ces substances qu'il ne peut synthétiser lui même (sauf la vitamine D synthétisée au niveau de la peau sous l'action du soleil et les Vitamines B2 et K synthétisées chez l'homme par l'intermédiaire de sa flore intestinale, mais cette production endogène ne suffit pas à satisfaire ses besoins, l'obligeant à trouver le complément dans son alimentation).

Elles sont apportées par l'alimentation. Elles sont au nombre de treize et se répartissent en deux catégories :
- les vitamines liposolubles qui sont absorbées en même temps que les graisses et stockées. Elles sont solubles dans les solvants organiques. Ce sont les vitamines A, D, E et K.
- les vitamines hydrosolubles qui ne sont pas stockées de manière prolongée et qui sont excrétées dans les urines quand leur apport est excédentaire. Elles sont solubles dans l'eau. Il s'agit des vitamines C, B1, B2, PP, B5, B6, B8, B9, B12.

Selon un mode encore plus préférentiel, la poudre granulée de lait végétal ou le lait végétal obtenu par dissolution de la poudre granulée de lait végétal contient au moins une vitamine choisie dans le groupe constitué par : la vitamine B1, la vitamine B2, la vitamine B9, la vitamine B12, la vitamine A, la vitamine D et leurs mélanges quelconques.

Selon un autre mode de réalisation avantageux de la présente invention, la poudre granulée de lait végétal ou le lait végétal obtenu par dissolution de la poudre granulée de lait végétal peut également être supplémentée en oligo-éléments.

Les oligo-éléments sont une classe de micronutriments nécessaires à la vie mais en quantités très faibles, de l'ordre du µg, et que l'organisme ne peut pas produire.
Les carences, tous comme les excès sont préjudiciables et toxiques pour l'organisme. L'effet d'un oligo-élément dépend de la dose d'apport. Lorsque l'oligo-élément est dit essentiel, l'absence, comme un apport excessif, sont létaux.
Les oligo-éléments essentiels répondent aux critères suivants :
- être présents à une concentration peu variable dans les tissus d'un organisme;
- provoquer, par leur absence, des anomalies structurelles et physiologiques proches, et ce de façon similaire dans plusieurs espèces;
- prévenir ou corriger ces troubles par leur seule présence.
D'un point de vue nutritionnel, il est possible de distinguer deux types d'oligo-éléments selon le risque de carence :
- oligo-éléments essentiels à risque de carence démontré : Iode, Fer, Cuivre, Fluor, Zinc, Sélénium, Chrome, Molybdène,
- oligo-éléments essentiels à faible risque de carence ou non prouvée chez l'Homme : Manganèse, Silicium, Vanadium, Nickel et Etain.

Selon un mode encore plus préférentiel, la poudre granulée de lait végétal ou le lait végétal obtenu par dissolution de la poudre granulée de lait végétal contient au moins un oligo-élément dit essentiel choisi dans le groupe constitué par : l'iode, le fer, le cuivre, le fluor, le zinc, le sélénium, le chrome, le molybdène et leurs mélanges quelconques.

Selon un troisième mode de réalisation avantageux de la présente invention, la poudre granulée de lait végétal ou le lait végétal obtenu par dissolution de la poudre granulée de lait végétal peut également être supplémentée en au moins un sel minéral.

Les sels minéraux sont des composants de l'organisme, d'origine minérale. Comme les vitamines, ils ne sont pas une source d'énergie, mais sont néanmoins indispensables à la vie. Ils se présentent sous forme ionique (anions ou cations).
Dans la présente demande, les sels minéraux concernent les composants présents dans l'organisme en quantité importante (quelques grammes). Ils sont également appelés macroéléments, à la différence des oligo éléments présents en faible quantité, voire à l'état de trace, qui ont déjà été évoqués dans la présente demande.

Les sels minéraux dans la présente demande sont choisis parmi le groupe constitué par le sodium, le potassium, le calcium, le fer, le magnésium, le phosphore, pris seuls ou en combinaison.

Selon un mode encore plus préférentiel, la poudre granulée de lait végétal ou le lait végétal obtenu par dissolution de la poudre granulée de lait végétal contient du calcium.

Le calcium remplit un rôle essentiel dans la constitution du squelette et des dents, ainsi' que dans la coagulation sanguine, l'activité musculaire, les fonctions hormonales, etc..Les apports calciques en provenance de l'alimentation sont indispensables car l'organisme élimine chaque jour une partie du calcium qu'il contient.

Un des intérêts majeurs de la présente invention est de pouvoir fournir à l'organisme tout le calcium nécessaire au quotidien et au bon fonctionnement de l'organisme.

Ainsi cette supplémentation en calcium de la poudre granulée de lait végétal ou du lait végétal obtenu par dissolution de ladite poudre granulée de lait végétal, permet d'éliminer totalement les produits laitiers de l'alimentation quotidienne, sans pour autant induire une quelconque carence ou un quelconque déficit en calcium.

Ainsi, la supplémentation de la poudre granulée de lait végétal ou du lait végétal obtenu par dissolution de la poudre granulée de lait végétal par un élément sélectionné dans le groupe comprenant les vitamines, les oligo-éléments, les sels minéraux et leurs mélanges, permet d'élaborer des nouveaux produits alimentaires tout à fait aptes à se substituer totalement au boissons d'origine laitières et/ou aux produits laitiers, sans introduire quelque déficit ou carence que ce soit.

Selon un mode préférentiel la poudre granulée de lait végétal ou lait végétal obtenu par dissolution de la poudre granulée de lait végétal contient un élément choisi dans le groupe comprenant le calcium, le phosphore, la vitamine B1, la vitamine B2, la vitamine B12, la vitamine B19, la vitamine A, la vitamine D et leurs mélangés.

Selon un autre mode encore plus préférentiel, la poudre granulée de lait végétal ou le lait végétal obtenu par dissolution de la poudre granulée de lait végétal contient au moins un acide-gras, et de préférence au moins un acide gras essentiel.

Les acides gras sont des composés lipidiques, qui participent de façon essentielle à la construction et à la vie des cellules. Les acides gras essentiels sont les acides gras que l'organisme n'est pas capable de fabriquer et qu'il doit impérativement trouver dans l'alimentation ou les compléments alimentaires.

D'une manière générale les acides gras et les acides gras essentiels jouent un rôle primordial dans le bon fonctionnement des cellules, notamment pour la composition de leur membrane et l'apport d'énergie. Ils ont également un rôle sur l'inflammation, l'immunité et la coagulation du sang.

Il existe trois types d'acides gras : les acides gras saturés, monoinsaturés et polyinsaturés.

La consommation d'acides gras saturés est déconseillée, car une surconsommation de ce type d'acides gras est directement corrélée au taux de cholestérol sanguin, et donc à l'augmentation des risques de maladies cardiovasculaires.

Selon un mode préféré, la poudre granulée de lait végétal ou le lait végétal obtenu par dissolution de la poudre granulée de lait végétal ne contient pas d'acides gras saturés.

Selon un autre mode préféré, la poudre granulée de lait végétal ou le lait végétal obtenu par dissolution de la poudre granulée de lait végétal ne contient qu'au moins un acide gras essentiel.

Les acides gras essentiels sont répartis en deux groupes : le groupe d'acides gras oméga-3 et le groupe d'acides gras oméga-6. Ces deux groupes sont des acides gras polyinsaturés.

Les principaux acides gras du groupe oméga-3 sont l'acide alpha-linolénique, l'acide éicosapentaénoïque et l'acide docosahexaénoïqueque. On les trouve habituellement dans les algues, les poissons dits gras (maquereau, saumon, thon, sardines, hareng, flétan, anchois...), et dans certaines huiles végétales comme par exemple l'huile de lin, l'huile de colza, l'huile de noix

De très nombreuses études ont démontré les effets positifs d'une alimentation riche en oméga-3 dans l'amélioration de la santé en général et dans la santé cardiovasculaire en particulier.

Les principaux acides gras du groupe oméga-6 sont l'acide linoléique que l'on trouve habituellement dans les huiles végétales comme par exemple l'huile de tournesol, de pépins de raisin, d'onagre, de germe de blé, de noix ; l'acide arachidonique retrouvé dans les chairs d'animaux (viandes) et l'acide docosapentaènoïque retrouvés dans certains poissons et abats.

Selon un mode préféré, la poudre granulée de lait végétal ou le lait végétal obtenu par dissolution de la poudre granulée de lait végétal contient au moins un acide gras essentiel choisi dans le groupe constitué par l'acide alpha-linolénique, l'acide linoléique, l'acide arachidonique, l'acide docosapentaènoïque et leur mélange.

Une des variantes de la présente invention concerne également une poudre granulée de lait végétal ou le lait végétal obtenu par dissolution de la poudre granulée de lait végétal caractérisé en ce qu'elle peut être colorée et/ou aromatisée.

Dans la présente invention, la coloration peut-être apportée par un colorant à usage alimentaire, considéré comme un additif alimentaire selon la Directive Européenne N° 89/107/CEE du 21 décembre 1988 relative au rapprochement des législations des États membres concernant les additifs pouvant être employés dans les denrées destinées à l'alimentation humaine.

Dans la présente invention, l'appellation « colorant » désigne toute substance habituellement non consommée comme aliment en soi et habituellement non utilisée comme ingrédient caractéristique dans l'alimentation, possédant ou non une valeur nutritive, et dont l'adjonction intentionnelle aux denrées alimentaires, dans un but technologique, au stade de leur fabrication, transformation, préparation, traitement, conditionnement, transport, ou entreposage, a pour effet, ou peut raisonnablement être estimée avoir pour effet, qu'elle devient elle-même ou que ses dérivés devienent, directement ou indirectement, un composant des denrées alimentaires.

Dans la présente invention, l'appellation « colorant » désigne toute substance ajoutée artificiellement à un aliment pour en changer la couleur, et le rendre théoriquement plus appétissant. Son origine peut être naturelle (organique ou minérale) ou de synthèse. Des exemples de colorants alimentaires susceptibles d'être ajoutés à la poudre granulée de lait végétal ou au lait végétal obtenu par dissolution de la poudre granulée de lait végétal sont par exemple la curcumine (jaune), le rouge de Cochenille À (rouge), les chlorophyllines (vert), le caramel (brun), les caroténoïdes (orange),...

D'autres exemples de colorants dans la présente invention sont également les pigments naturels comme par exemple les pigments naturels de carotte, de langouste, de poisson, ainsi que les pigments naturels de fleurs de feuilles et de fruits (abricots, fruits rouges,..).

Dans la présente invention, la poudre granulée de lait végétal ou le lait végétal obtenu par dissolution de la poudre granulée de lait végétal peut également être aromatisée grâce à l'ajout d'un ou plusieurs arômes.

Dans la présente invention, l'appellation « arôme » désigne toutes substances non destinées à être consommées en l'état, qui sont ajoutés aux denrées alimentaires pour leur conférer une odeur et/ou un goût ou modifier ceux-ci. Elles sont issues ou constituées des catégories suivantes : substances aromatisantes, préparations aromatisantes, arômes obtenus par traitement thermique, arômes de fumée, précurseurs d'arôme ou autres arômes ou leurs mélanges.

Les substances aromatisantes sont des substances chimiques définies, ce qui inclut les substances aromatisantes obtenues par synthèse chimique ou isolées par des procédés chimiques, et les substances aromatisantes naturelles. Les préparations aromatisantes sont des arômes, autres que des substances chimiques définies, qui sont obtenues par des procédés physiques, enzymatiques ou microbiologiques appropriés, à partir de matières d'origine végétale, animale ou microbiologique prises en l'état ou après leur transformation pour la consommation humaine. Les précurseurs d'arôme tels que les hydrates de carbone, les oligopeptides et les acides aminés confèrent une flaveur aux denrées alimentaires par des réactions chimiques qui se produisent pendant la transformation de ces denrées

Enfin, la présente invention concerne également un procédé de préparation d'un lait végétal caractérisé en ce qu'une poudre granulée de lait végétal comprenant une composition de protéines de pois et au moins un hydrolysat d'amidon, et possédant un diamètre moyen volumique laser D4,3 compris entre 10µm et 500µm, de préférence entre 50µm et 350µm et encore plus préférentiellement entre 70µm et 250µm, et une matière sèche, déterminée après étuvage à 130°C pendant 2 heures, supérieure à 80%, de préférence supérieure à 85%, et encore plus préférentiellement supérieure à 90%, est mise en suspension dans de l'eau à un taux de dissolution compris entre 2 et 30% en poids sec, de préférence entre 2 et 20%, plus préférentiellement encore entre 3 et 15%, et en particulier entre 5 et 10%.

Dans un mode préféré, les différents éléments ou ingrédients susceptibles d'être rajoutés à la poudre granulée de lait végétal ou au lait végétal obtenu par dissolution de la poudre granulée de lait végétal sont ajoutés lors du procédé de préparation du lait végétal, c'est-à-dire lors de la mise en suspension de la poudre granulée de lait végétal dans un liquide alimentaire.

L'invention sera encore mieux comprise à la lecture des exemples qui suivent, lesquels se veulent illustratifs en faisant seulement état de certains modes de réalisation et de certaines propriétés avantageuses selon l'invention, et non limitatifs.

### EXEMPLE 1 : Lait végétal obtenu selon la présente invention

Dans cet exemple figure une formule de base d'un lait végétal nature (sans arôme).

Ensuite, en fonction des cibles visées (aliments pour allaitement, et plus particulièrement aliments pour la préparation de laits d'allaitements pour les nourrissons et enfants en bas âge, ou aliments destinés à toute la famille par exemple), des supplémentations (vitamine, éléments minéraux, oligoéléments,..) pourront être effectués.

Dans cet exemple, le lait végétal a été obtenu par dissolution dans de l'eau d'une poudre granulée de lait végétal selon la présente invention.
Ladite poudre granulée de lait végétal a été obtenue en utilisant un ratio pondéral composition de protéines de pois/maltodextrines de 70/30.
La poudre granulée de lait végétal contient donc 70% d'une composition de protéines de pois (à un taux de protéines totales de 85%) et 30% de maltodextrines de DE 19.
Un lait végétal nature a été préparé.
Sa composition nutritionnelle a été déterminée et ledit lait végétal a été goûté et noté par un jury d'analyse sensoriel.

### 1. Recette utilisée

**Tableau 1**

| **Ingrédients** | **Mise en oeuvre (poids)** |
|---|---|
| Poudre granulée de lait végétal selon l'invention | 7,6 |
| Maltodextrine GLUCIDE® 19 | 4,7 |
| Huile de tournesol | 1,6 |
| Eau | 86,2 |
| TOTAL | 100 |

La formule du tableau 1 a été établie à partir de la composition nutritionnelle d'un lait de vache commercial demi-écrémé stérilisé UHT.

Afin de retrouver les mêmes teneurs en carbohydrates que le lait commercial, des maltodextrines supplémentaires ont été ajoutées à la formule.
Elles permettent également de donner du corps en bouche au lait végétal.

### 2. Mode opératoire

- L'eau a été chauffée à 65°C.
- La poudre granulée dé lait végétal et la maltodextrine GLUCIDEX® DE 19 ont été ajoutées à l'eau, et l'ensemble a été laissé au minimum 30 minutes à température ambiante afin de permettre une bonne hydratation des deux produits ajoutés.
- L'huile de tournesol a été ajoutée progressivement au mélange précédent, sous agitation grâce à un agitateur de type POLYTRON®, à une vitesse de 4000 tours/min. L'agitation a été maintenue pendant 2 minutes.
- Le mélange précédent a ensuite été homogénéisé grâce à un homogénéisateur NIRO® Soavi (groupe GEA), à une pression de 250 bars.
- L'émulsion ainsi obtenue a ensuite été stérilisée sur un mini-cuiseur en positionnant le repère moteur de façon à ce que le lait végétal ait une température de sortie comprise entre 136 et 140°C. La température de consigne du cuiseur était de 190°C et le repère moteur a été positionné sur 3,5.
- Le conditionnement a ensuite eut lieu dans des bouteilles plastiques stériles de contenance 11, et le remplissage des bouteilles à la sortie a été stérilisé par une flamme.

### 3. Résultats

### • Composition du lait végétal obtenu

| | |
|---|---|
| Protéines/sec | 4% |
| Glucides/sec | 4,60% |
| Valeur énergétique en Kcal/100ml | 48,5 |
| pH | 7,54 |

La composition du lait végétal nature obtenu est identique à la composition nutritionnelle d'un lait demi-écrémé stérilisé UHT. La présente invention permet donc de se rapprocher en termes de composition nutritionnelle d'un lait de vache traditionnel.
Cet exemple a été basé sur un lait demi-écrémé mais la même chose peut être réalisée en se basant sur un lait écrémé ou entier.

### • Analyse sensorielle

Le lait végétal nature a été gouté et comparé par un jury d'experts en analyse sensoriel de 20 personnes, à un lait de vache commercial demi-écrémé stérilisé UHT, et également à un lait de soja nature commercial.
Les paramètres suivants ont été testés et notés sur une échelle de 1 à 5, 1 étant la note la plus mauvaise et 5 la meilleure : couleur, goût, onctuosité en bouche, consistance, note générale.

| | **Lait de vache UHT** | **Lait végétal obtenu selon la présente invention** | **Lait de soja nature** |
|---|---|---|---|
| **Couleur** | 5 | 4 | 4 |
| **Goût** | 5 | 4 | 2 |
| **Onctuosité en bouche** | 5 | 5 | 4 |
| **Consistance** | 5 | 5 | 3 |
| **Notre générale** | 5 | 5 | 3 |

La version nature du lait végétal obtenu selon la présente invention présente un très léger arrière-goût de pois et de céréales en comparaison du lait de vache commercial. Sa couleur n'est également pas aussi blanche que celle du lait de vache. Cela dit, au niveau de l'onctuosité en bouche et de la consistance, le lait végétal de la présente invention a été noté de façon similaire au lait de vache.
La note générale obtenue a d'ailleurs été la note maximale de 5, preuve que ce lait végétal a été très apprécié des membres du jury.
Le lait végétal a également été comparé à un lait de soja nature commercial, et a été jugé de bien meilleure qualité, à la fois au niveau du goût, de l'onctuosité en bouche et de la consistance.
Une étude de stabilité a également été réalisée et le présent lait végétal se conserve très bien dans le temps, même à température ambiante.

L'intérêt de la présente invention est donc parfaitement démontré par cet exemple.

### EXEMPLE 2 : Lait végétal sucré obtenu selon la présente invention

Dans cet exemple figure une formule de base d'un lait végétal sucré mais non aromatisé.
La poudre granulée de lait végétal utilisée pour la préparation du lait végétal est identique à celle utilisée dans l'exemple 1.
La poudre granulée de lait végétal contient donc 70% d'une composition de protéines de pois (à un taux de protéines totales de 85%) et 30% de maltodextrines de DE 19.

### 1. Recette utilisée

| **Ingrédients** | **Mise en oeuvre (poids)** |
|---|---|
| Poudre granulée de lait végétal selon l'invention | 7,6 |
| Maltodextrine GLUCIDEX® DE 19 | 4,6 |
| Huile de tournesol | 1,6 |
| Sirop de sucre de canne | 4 |
| Eau | 82,2 |
| TOTAL | 100 |

### 2. Mode opératoire

Le même mode opératoire que celui décrit dans l'exemple 1 a été utilisé. Le sirop de sucre de canne a été ajouté en même temps que l'huile de tournesol, c'est-à-dire avant le passage à l'homogénéisateur.

### 3. Résultats

### Composition du lait végétal obtenu

| | |
|---|---|
| Protéines/sec | 4% |
| Glucides/sec | 10% |
| Valeur énergétique en Kcal/100ml | 70 |
| pH | 7,39 |

Ce lait a également fait l'objet d'une dégustation par le jury d'experts en analyse sensoriel de 20 personnes.
Le très léger arriere-goût de pois et de céréales remarqué pour le lait végétal nature se trouve atténué dans cette version de lait végétal nature sucré.
La valeur énergétique de ce lait végétal sucré est également plus élevée, et il pourrait par exemple être destiné à des personnes ayant besoin de boissons à valeur énergétique élevée.

### EXEMPLE 3 : Lait végétal aromatisé fruité obtenu selon la présente invention

Dans cet exemple figure une formule d'un lait végétal aromatisé fruité correspondant du point de vue nutritionnel à un lait de croissance pour les enfants de plus de 12 mois.
La poudre granulée de lait végétal utilisée pour la préparation du lait végétal est identique à celle utilisée dans l'exemple 1. La poudre granulée de lait végétal contient donc 70% d'une composition de protéines de pois (à un taux de protéines totales de 85%) et 30% de maltodextrines de DE 19.
Le caractère aromatisé fruité a été obtenu en utilisant un mélange de compote de pommes, de jus de poire et d'arôme pêche naturel (Société Mane et Fils, Le Bar sur Loup).

### 1. Recette utilisée

| **Ingrédients** | **Mise en oeuvre (poids)** |
|---|---|
| Poudre granulée de lait végétal selon l'invention | 5,50 |
| Maltodextrine GLUCIDEX® DE 19 | 5,66 |
| Huile de Colza | 0,63 |
| Huile de Tournesol | 0,27 |
| Huile de Stéarine | 0,85 |
| Eau | 77,81 |
| Compte de pommes | 5,00 |
| Jus de poires | 3,00 |
| Arôme pêche | 0,30 |
| NUTRIOSE® FB 06 | 0,98 |
| Vitamines : | |
| - B1 | 0,1 mg |
| - B2 | 0,2 mg |
| Sels minéraux **:** | |
| - Calcium | 77 mg |
| - Magnésium | 9 mg |
| TOTAL | 100 |

Le NUTRIOSE® FB06 est une fibre soluble commercialisée également par la société Demanderesse.

### 2. Mode opératoire

- L'eau a été chauffée à 65°C.
- La poudre granulée de lait végétal, la maltodextrine GLUCIDEX® de DE 19 et le NUTRIOSE® FB 06 ont été ajoutées à l'eau, et l'ensemble a été laissé au minimum 30 minutes à température ambiante afin de permettre une bonne hydratation des trois produits ajoutés.
- Ajouter la compote de pommes, le jus de poire et l'arôme de pêche.
- Les lipides ont ensuite été ajoutés progressivement au mélange précédent, sous agitation grâce à un agitateur de type POLYTRON®, à une vitesse de 4000 tours/min. L'agitation a été maintenue pendant 3 minutes.
- Le mélange précédent a ensuite été homogénéisé grâce à un homogénéisateur NIRO® Soavi (groupe GEA), à une pression de 250 bars.
- L'émulsion ainsi obtenue a ensuite été pasteurisée dans un bain-marie à 90°C pendant 30 minutes.
- Les vitamines et les sels minéraux ont ensuite été rajoutés par le biais de solutions stériles les contenant.
- Le lait végétal aromatisé fruité a été réparti dans des bouteilles stériles de contenance d'un litre et le tout a été placé au réfrigérateur pour conservation avant dégustation.

### 3. Résultats

### Composition du lait végétal aromatisé fruité obtenu

| | En g/100 mL de lait végétal aromatisé |
|---|---|
| Protéines | 2 |
| Glucides | 9 |
| Lipides | 2 |
| Fibres | 0,8 |
| Valeur énergétique en Kcal/100ml | 61 |

Au niveau de la valeur nutritionnelle de ce lait végétal aromatisé fruité, les teneurs en protéines, en glucides et en lipides sont similaires aux teneurs retrouvées dans les laits de croissance commerciaux.
Dans cet exemple, une supplémentation avec des vitamines et des minéraux a été réalisée.
Selon le but recherché, d'autres apports vitaminiques, minéraux ou autres peuvent être réalisés.

Ce lait végétal aromatisé fruité a également fait l'objet d'une dégustation par le jury d'experts en analyse sensoriel de 20 personnes.
Son goût, son onctuosité en bouche et sa consistance ont été jugés très satisfaisants par l'ensemble du panel.

Cet exemple démontre parfaitement que la poudre granulée de lait végétal de la présente invention permet la préparation d'un lait végétal aromatisé fruité destiné à l'allaitement des enfants en bas âge, et qui possède les mêmes valeurs nutritionnelles qu'un lait de croissance classique utilisé et formulé à base de lait de vache.
Ceci permet d'éliminer tous risques d'allergies liés aux laits de vache tout en permettant d'éviter les carences, nutritionnelles.

En fonction de la cible et de l'impact visés, des supplémentations diverses peuvent être réalisées.

## Revendications

1. Poudre granulée de lait végétal comprenant au moins une composition de protéines de pois et au moins un hydrolysat d'amidon caractérisée en ce ladite poudre présente:
- un diamètre moyen volumique laser D4,3 compris entre 10µm et 500µm, de préférence entre 50µm et 350µm et encore plus préférentiellement entre 70µm et 250µm, et
- une matière sèche, déterminée après étuvage à 130°C pendant 2 heures, supérieure à 80%, de préférence supérieure à 85%, et encore plus préférentiellement supérieure à 90%
et **caractérisée en ce que** le ratio pondéral de la composition de protéines de pois à l'hydrolysat d'amidon de la poudre granulée est compris entre 80 :20 et 45 :55, **en ce que** l'hydrolysat d'amidon est une maltodextrine et **en ce que** la somme des quantités de protéines de pois et d'hydrolysat d'amidon de ladite poudre granulée est comprise entre 50 et 100% de la masse totale de ladite poudre granulée (sec/sec).

2. Poudre granulée de lait végétal selon la revendication 1, **caractérisé en ce que** le ratio pondéral de la composition de protéines de pois à l'hydrolysat d'amidon de la poudre granulée est compris entre 80 :20 et 55 :45.

3. Poudre granulée de lait végétal selon la revendication 1, **caractérisé en ce que** l'hydrolysat d'amidon est une maltodextrine dont le DE est compris entre 15 et 19.

4. Poudre granulée de lait végétal selon l'une quelconque des revendications 1 à 3, **caractérisé en ce qu'**il contient en outre une fibre végétale, de préférence une fibre végétale est choisie parmi les fibres solubles, les fibres insolubles et leurs mélanges quelconques.

5. Poudre granulée de lait végétal selon la revendication 4, caractérisé en ce ladite fibre végétale soluble est choisie dans le groupe constitué par les fructanes dont les Fructo-oligosaccharides (FOS) et l'inuline, les Gluco-oligosaccharides (GOS), les Isomalto-oligosaccharides (IMOs), les Trans-galacto-oligosaccharide (TOS), les pyrodextrines, le polydextrose, les maltodextrines branchées, les dextrines indigestibles et les oligosaccharides solubles issus de plantes oléagineuses ou protéagineuses.

6. Poudre granulée de lait végétal selon l'une quelconque des revendications 4 à 5, **caractérisé en ce que** ladite fibre végétale soluble est une maltodextrine branchée.

7. Poudre granulée de lait végétal selon la revendication 4, caractérisé en ce ladite fibre végétale insoluble est choisie dans le groupe constitué par les amidons résistants, les fibres de céréales, les fibres de fruits, les fibres de légumes, les fibres de légumineuses et leurs mélanges.

8. Poudre granulée de lait végétal selon l'une quelconque des revendications 1-7, **caractérisé en ce qu'**il contient en outre un élément sélectionné dans le groupe comprenant les vitamines, les oligo-éléments, les sels minéraux et leurs mélanges.

9. Poudre granulée de lait végétal selon l'une quelconque des revendications 1-8, **caractérisé en ce qu'**il contient un élément sélectionné dans le groupe comprenant le calcium, le phosphore, la vitamine B1, la vitamine B2, la vitamine B12, la vitamine B19, la vitamine A, la vitamine D et leurs mélanges.

10. Poudre granulée de lait végétal selon l'une quelconque des revendications 1-9, **caractérisé en ce qu'**il contient au moins un acide gras, et de préférence un acide gras essentiel.

11. Poudre granulée de lait, végétal selon l'une quelconque des revendications 1-10, **caractérisé en ce qu'**il peut-être également aromatisé et/ou coloré.

12. Procédé de préparation d'un lait végétal **caractérisé en ce qu'**une poudre granulée de lait végétal est mise en suspension dans de l'eau, de préférence à un taux de dissolution compris entre 2 et 30% en poids sec, de préférence entre 2 et 20%, plus préférentiellement encore entre 3 et 15%, et en particulier entre 5 et 10%, la poudre granulée de lait végétal comprenant une composition de protéines de pois et au moins un hydrolysat d'amidon, et possédant un diamètre moyen volumique laser D4,3 compris entre 10µm et 500µm, de préférence entre 50µm et 350µm et encore plus préférentiellement entre 70µm et 250µm, et une matière sèche, déterminée après étuvage à 130°C pendant 2 heures, supérieure à 80%, de préférence supérieure à 85%, et encore plus préférentiellement supérieure à 90%, et **caractérisée en ce que** le ratio pondéral de la composition de protéines de pois à l'hydrolysat d'amidon de la poudre granulée est compris entre 80 :20 et 45 :55, **en ce que** l'hydrolysat d'amidon est une maltodextrine, et **en ce que** la somme des quantités de protéines de pois et d'hydrolysat d'amidon de ladite poudre granulée est comprise entre 50 et 100% de la masse totale de ladite poudre granulée (sec/sec).

## Patentansprüche

1. Granuliertes Pulver von Pflanzenmilch, umfassend wenigstens eine Zusammensetzung von Erbsenproteinen und wenigstens ein Stärkehydrolysat, **dadurch gekennzeichnet, dass** besagtes Pulver aufweist:
- einen mittleren Laser-Volumen-Durchmesser D4,3 zwischen 10 µm und 500 µm, bevorzugt zwischen 50 µm und 350 µm und noch bevorzugter zwischen 70 µm und 250 µm, und
- eine Trockenmasse, bestimmt nach 2 Stunden Trocknen bei 130°C, von mehr als 80%, bevorzugt mehr als 85% und noch bevorzugter mehr als 90%,
und **dadurch gekennzeichnet, dass** das Gewichtsverhältnis der Zusammensetzung von Erbsenproteinen zu Stärkehydrolysat des granulierten Pulvers zwischen 80:20 und 45:55 beträgt, und **dadurch gekennzeichnet, dass** das Stärkehydrolysat ein Maltodextrin ist, und **dadurch gekennzeichnet, dass** die Summe der Mengen an Erbsenproteinen und Stärkehydrolysat besagten granulierten Pulvers zwischen 50 und 100% der Gesamtmasse besagten granulierten Pulvers (trocken/trocken) beträgt.

2. Granuliertes Pulver von Pflanzenmilch gemäß Anspruch 1, **dadurch gekennzeichnet, dass** das Gewichtsverhältnis der Zusammensetzung von Erbsenproteinen zu Stärkehydrolysat des granulierten Pulvers zwischen 80:20 und 55:45 beträgt.

3. Granuliertes Pulver von Pflanzenmilch gemäß Anspruch 1, **dadurch gekennzeichnet, dass** das Stärkehydrolysat ein Maltodextrin ist, dessen DE zwischen 15 und 19 beträgt.

4. Granuliertes Pulver von Pflanzenmilch gemäß einem der Ansprüche 1 bis 3, **dadurch gekennzeichnet, dass** es außerdem eine Pflanzenfaser enthält, bevorzugt eine Pflanzenfaser, ausgewählt aus löslichen Fasern, unlöslichen Fasern und beliebigen Gemischen davon.

5. Granuliertes Pulver von Pflanzenmilch gemäß Anspruch 4, **dadurch gekennzeichnet, dass** besagte lösliche Pflanzenfaser aus der Gruppe ausgewählt ist, bestehend aus Fructanen, darunter Fructooligosacchariden (FOS) und Inulin, Glucooligosacchariden (GOS), Isomaltooligosacchariden (IMOs), trans-Galactooligosacchariden (TOS), Pyrodextrinen, Polydextrose, verzweigten Maltodextrinen, unverdaulichen Dextrinen und aus Öl- oder Proteinpflanzen gewonnenen löslichen Oligosacchariden.

6. Granuliertes Pulver von Pflanzenmilch gemäß einem der Ansprüche 4 bis 5, **dadurch gekennzeichnet, dass** besagte lösliche Pflanzenfaser ein verzweigtes Maltodextrin ist.

7. Granuliertes Pulver von Pflanzenmilch gemäß Anspruch 4, **dadurch gekennzeichnet, dass** besagte unlösliche Pflanzenfaser aus der Gruppe ausgewählt ist, bestehend aus resistenten Stärken, Getreidefasern, Fruchtfasern, Gemüsefasern, Fasern von Hülsenfrüchten und Gemischen davon.

8. Granuliertes Pulver von Pflanzenmilch gemäß einem der Ansprüche 1 bis 7, **dadurch gekennzeichnet, dass** es außerdem einen Bestandteil enthält, ausgewählt aus der Gruppe, umfassend Vitamine, Spurenelemente, Mineralsalze und Gemische davon.

9. Granuliertes Pulver von Pflanzenmilch gemäß einem der Ansprüche 1 bis 8, **dadurch gekennzeichnet, dass** es einen Bestandteil enthält, ausgewählt aus der Gruppe, umfassend Calcium, Phosphor, Vitamin B1, Vitamin B2, Vitamin B12, Vitamin B19, Vitamin A, Vitamin D und Gemische davon.

10. Granuliertes Pulver von Pflanzenmilch gemäß einem der Ansprüche 1 bis 9, **dadurch gekennzeichnet, dass** es wenigstens eine Fettsäure und bevorzugt eine essentielle Fettsäure enthält.

11. Granuliertes Pulver von Pflanzenmilch gemäß einem der Ansprüche 1 bis 10, **dadurch gekennzeichnet, dass** es auch aromatisiert und/oder gefärbt sein kann.

12. Verfahren zur Herstellung einer Pflanzenmilch, **dadurch gekennzeichnet, dass** ein granuliertes Pulver von Pflanzenmilch in Wasser suspendiert wird, bevorzugt mit einem Auflösungsgrad zwischen 2 und 30 Trockengew.-%, bevorzugt zwischen 2 und 20%, noch bevorzugter zwischen 3 und 15% und ganz besonders zwischen 5 und 10%, wobei das granulierte Pulver von Pflanzenmilch eine Zusammensetzung von Erbsenproteinen und wenigstens ein Stärkehydrolysat umfasst und einen mittleren Laser-Volumen-Durchmesser D4,3 zwischen 10 µm und 500 µm, bevorzugt zwischen 50 µm und 350 µm und bevorzugter zwischen 70 µm und 250 µm, und eine Trockenmasse, bestimmt nach 2 Stunden Trocknen bei 130°C, von mehr als 80%, bevorzugt mehr als 85% und noch bevorzugter mehr als 90% besitzt, und **dadurch gekennzeichnet, dass** das Gewichtsverhältnis der Zusammensetzung von Erbsenproteinen zu Stärkehydrolysat des granulierten Pulvers zwischen 80:20 und 45:55 beträgt, und **dadurch gekennzeichnet, dass** das Stärkehydrolysat ein Maltodextrin ist, und **dadurch gekennzeichnet, dass** die Summe der Mengen an Erbsenproteinen und Stärkehydrolysat besagten granulierten Pulvers zwischen 50 und 100% der Gesamtmasse besagten granulierten Pulvers (trocken/trocken) beträgt.

## Claims

1. A granulated vegetable milk powder comprising at least one pea protein composition and at least one starch hydrolyzate, **characterized in that** said powder has:
- a laser volume average diameter D4,3 of between 10 µm and 500 µm, preferably between 50 µm and 350 µm, and even more preferably between 70 µm and 250 µm, and
- a dry matter content, determined after stoving at 130°C for 2 hours, of greater than 80%, preferably greater than 85%, and even more preferably greater than 90%,
and **characterized in that** the weight ratio of the pea protein composition to the starch hydrolyzate of the granulated powder is between 80:20 and 45:55, the starch hydrolyzate is a maltodextrin and the sum of the amounts of pea proteins and of starch hydrolyzate of said granulated powder is between 50% and 100%, of the total mass of said granulated powder (dry/dry).

2. The granulated vegetable milk powder as claimed in claim 1, **characterized in that** the weight ratio of the pea protein composition to the starch hydrolyzate of the granulated powder is between 80:20 and 55:45.

3. The granulated vegetable milk powder as claimed in claim 1, **characterized in that** the starch hydrolyzate is a maltodextrin of which the DE is between 15 and 19.

4. The granulated vegetable milk powder as claimed in any one of claims 1 to 3, **characterized in that** it further contains a vegetable fiber, preferably a vegetable fiber chosen from soluble fibers, insoluble fibers and any mixtures thereof.

5. The granulated vegetable milk powder as claimed in claim 4, **characterized in that** said soluble vegetable fiber is chosen from the group consisting of fructans, including fructooligosaccharides (FOSs) and inulin, glucooligosaccharides (GOSs), isomaltooligosaccharides (IMOs), trans-galactooligosaccharides (TOSs), pyrodextrins, polydextrose, branched maltodextrins, indigestible dextrins and soluble oligosaccharides derived from oleaginous plants or protein-producing plants.

6. The granulated vegetable milk powder as claimed in any one of claims 4 to 5, **characterized in that** said soluble vegetable fiber is a branched maltodextrin.

7. The granulated vegetable milk powder as claimed in claim 4, **characterized in that** said insoluble vegetable fiber is chosen from the group consisting of resistant starches, cereal fibers, fruit fibers, fibers from vegetables, legume fibers and mixtures thereof.

8. The granulated vegetable milk powder as claimed in any one of claims 1 to 7, **characterized in that** it further contains an element selected from the group comprising vitamins, trace elements, mineral salts and mixtures.

9. The granulated vegetable milk powder as claimed in any one of claims 1 to 8, **characterized in that** it further contains an element selected from the group comprising calcium, phosphorus, vitamin B1, vitamin B2, vitamin B12, vitamin B19, vitamin A, vitamin D and mixtures thereof.

10. The granulated vegetable milk powder as claimed in any one of claims 1 to 9, **characterized in that** it contains at least one fatty acid, and preferably one essential fatty acid.

11. The granulated vegetable milk powder as claimed in any one of claims 1 to 10, **characterized in that** it can also be flavored and/or colored.

12. A process for preparing vegetable milk, **characterized in that** a granulated vegetable milk powder is suspended in water, preferably at a degree of dissolution of between 2% and 30% by dry weight, preferably between 2% and 20%, even more preferably between 3% and 15%, and in particular between 5% and 10%, the granulated vegetable milk powder comprising a pea protein composition and at least one starch hydrolyzate, and having a laser volume mean diameter D4,3 of between 10 µm and 500 µm, preferably between 50 µm and 350 µm, and even more preferably between 70 µm and 250 µm, and a dry matter content, determined after stoving at 130°C for 2 hours, of greater than 80%, preferably greater than 85%, and even more preferably greater than 90%, and **characterized in that** the weight ratio of the pea protein composition to the starch hydrolyzate of the granulated powder is between 80:20 and 45:55, the starch hydrolyzate is a maltodextrin and the sum of the amounts of pea proteins and of starch hydrolyzate of said granulated powder is between 50% and 100%, of the total mass of said granulated powder (dry/dry).
